# EUROPEAN PATENT SPECIFICATION

(11) **EP 1 977 470 B1**
(45) Date of publication and mention of the grant of the patent: **22.01.2014**
(21) Application number: 05858765.0
(22) Date of filing: 30.12.2005
(51) Int. Cl.: H01M 8/04

(54) **Response to ingestion of gas into fuel cell coolant**
Reaktion auf die Gasaufnahme in ein Brennstoffzellenkühlmittel
Réaction à l'absorption de gaz dans un fluide caloporteur de pile à combustible

(43) Date of publication of application: 08.10.2008
(73) Proprietor: UTC Power Corporation, South Windsor, CT 06740 (US)
(72) Inventor: BALLIET, Ryan, J., West Hartford, CT 06107 (US)
(74) Representative: Klunker . Schmitt-Nilson . Hirsch
(86) International application number: PCT/US2005/047567
(87) International publication number: WO 2007/086827

(56) References cited:
- JP-A- 2005 183 023
- US-A1- 2001 019 789
- US-A1- 2004 110 049
- US-A1- 2004 110 049
- US-A1- 2004 265 654

## Description

### Technical Field

This invention relates to sensing the presence of excessive ingestion of gas in the coolant channels of a fuel cell stack, so that irreversible damage to the fuel cell stack may be avoided.

### Background Art

In fuel cell stacks which utilize porous, at least partially hydrophilic reactant gas channel plates, which are variously referred to as "water transport plates" in some cases, bubble pressure is relied on to keep an interface between the gas (on the side of the reactant gas channels) and the water (on the side of the coolant channels). Bubble pressure is discussed in application publication US2004/0106034. If bubble pressure is lost, gas ingests into the coolant system at a rate which may be between 10 and 100 times greater than the normal rate of gas ingestion. The excessive gas in the coolant system may cause dryout of the proton exchange membrane, and possible failure thereof, reactant starvation, and system safety hazards.

US 2001/0019789 discloses a fuel cell system comprising a fuel cell stack having coolant channels connected to a coolant circuit. The coolant circuit comprises a radiator and a reserve tank, and any gas leaked into the cooling water collects in an upper tank of the radiator and in the reserve tank. Hydrogen sensors are provided in the gas spaces of the upper tank and the reserve tank or in a cooling water channel, and if hydrogen is detected an operator is informed by a warning light.

US 2004/0265654 Al discloses a fuel cell system comprising a fuel cell stack having coolant channels connected to a coolant circuit. The coolant circuit is provided with a cooling liquid storage container having a fuel gas sensor and a gas space connected with the air supply pipe by means of a signal pressure pipe. The cooling liquid storage container breathes, i.e. it discharges excess gas into the air supply pipe, and receives air from the air supply pipe if the pressure is low in the cooling liquid storage container. In this manner, the fuel gas introduced into the cooling liquid is diluted.

JP 2005-183023 A discloses a fuel cell system having a cooling water subsystem, comprising a coolant tank, a pressure sensor and a hydrogen concentration sensor. When the measured hydrogen concentration exceeds a threshold value, a controller decreases the power drawn from the fuel cell stack and increases the pressure differential between the coolant circuit and the hydrogen gas.

US 2004/0110049 A1 discloses a fuel cell system comprising a fuel cell stack having porous separator plates through which a coolant flows. The coolant exhaust is provided with a gas sensor in the form of a conductivity sensor or an ultrasonic flowmeter, and the coolant outlet pressure is adjusted in response to a signal from the gas sensor. For example, the magnitude of a negative pressure difference, where coolant pressure is lower than the oxidant pressure, can be decreased if gas is detected in the coolant exhaust. Thus, ingestion of gas into the coolant becomes less likely.

### Disclosure of Invention

Subject-matter of the invention is a method and a fuel cell power plant as claimed in the independent claims. Embodiments of the invention are claimed in the respective dependent claims.

Aspects of the invention include: detecting excessive ingestion of gas into the coolant of fuel cell stacks; preventing irreversible damage due to gas ingestion in fuel cell stack coolant channels; improved PEM fuel cell power plants.

According to the present invention, a gas flow detector is disposed in line with a gas vent that vents a fuel cell stack coolant flow path. In further accord with the invention, in fuel cell stacks employing convection cooling with water circulating through the system and external heat exchanger, the gas flow detectors are disposed on an accumulator vent.

According to the invention, the gas flow detectors each comprise a pressure sensor between the accumulator gas vent and an orifice leading to ambient Excessive pressure indicates excessive ingestion of gas into the coolant. The pressure sensor may be a simple pressure switch.

In systems employing the present invention, excessive gaseous flow from a vent through the orifice of the invention will create a substantial pressure drop, the increase of which is readily sensed so as to permit the controller to take measures to avoid damage to the system, such as shutting the power plant down or increasing the differential between the coolant water pressure and the pressure of reactant gases.

Other aspects, features and advantages of the present invention will become more apparent in the light of the following detailed description of exemplary embodiments thereof, as illustrated in the accompanying drawing.

### Brief Description of the Drawings

Fig. 1 is a simplified, stylized, block diagram of a portion of a fuel cell power plant using convective cooling with circulating water flow and incorporating the present invention.
Fig. 2 is a simplified, stylized, block diagram of a portion of a fuel cell power plant employing evaporative cooling and incorporating the present invention.

### Mode(s) for Carrying Out the Invention

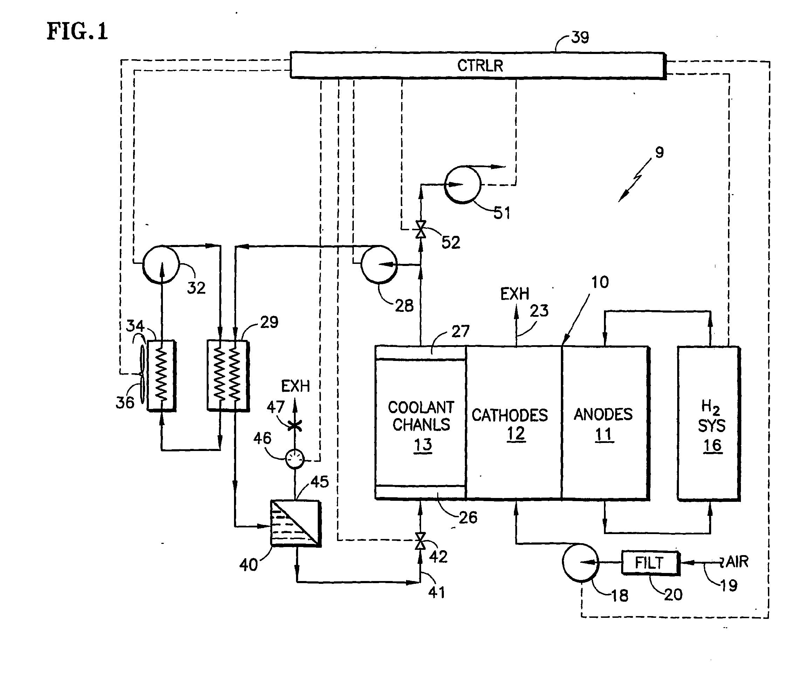

Referring to Fig. 1, a fuel cell power plant 9 includes a fuel cell stack 10 having anodes 11, cathodes 12 and coolant channels 13. The anodes 11 receive hydrogen from a hydrogen system 16 which may either supply a hydrogen-rich reformate gas or substantially pure hydrogen (such as commercial-grade hydrogen). There may be a fuel recycle loop and purging of the fuel channels, all as is conventional, the details of which do not affect the present invention.

In this embodiment, the cathodes 12 receive (as oxidant reactant gas) air from a pump 18 that is fed from ambient air 19 through a filter 20, in a conventional way. After passing through the oxidant reactant gas channels of the cathodes 12, the air is expelled to exhaust 23.

When the fuel cell stack is operating, water is continuously circulated through the coolant channels 13, from a coolant inlet 26 through the channels in each of the fuel cells, and thence through a coolant outlet manifold 27 to a coolant pump 28. The pump 28 draws the liquid through the coolant channels and passes it through a heat exchanger 29 where it may be cooled, when necessary, by exchange with a non-freezable liquid (such as polyethylene glycol) circulating through the heat exchanger 29 by means of a pump 32. The pump 32 draws the non-freezable liquid through another heat exchanger 34 which is cooled by a fan 36, all of which is under the control of a controller 39.

The coolant flows from the heat exchanger 29 into a liquid air separator 40, the liquid being transmitted by a conduit 41 to the coolant inlet manifold 26 through a pressure control valve 42, which permits adjusting the pressure of the coolant in the coolant channels to assure proper bubble pressure, as described hereinbefore.

In accordance with the invention, the gas vent 45 of the separator 40 is connected to a pressure sensor 46, through an orifice 47 to exhaust (such as ambient). The pressure sensor may simply provide a signal indicative of pressure to the controller 39, or it may be a switch which either goes on or off as a function of a pressure deemed to be excessive, thereby indicating too much flow of gas through the orifice 47 and hence too much leakage into the coolant channels 13.

In response to determining from the pressure sensor 46 that the coolant channels are ingesting too much gas, the controller may respond in any of a number of ways, or in a combination of ways. For instance, the controller may simply shut the system down by causing the reactant flows to cease, in accordance with a conventional shutdown routine. On the other hand, the controller may adjust the relative pressure between the reactant gases in the anodes and cathodes and the water in the coolant channels 13. This may be achieved by adjusting the coolant channel water pressure by means of the valve 42 and/or the speed of the pump 28, or by adjusting pressure in the cathodes, by virtue of control over the pump, 18 along with adjusting hydrogen pressure within the hydrogen system 16.

In the general case, the pressure sensor 46 and orifice 47 comprise means for indicating to the controller 39 that there is excessive flow of gas through the vent, resulting from excessive ingestion of gas into the coolant within the coolant channels 13.

If desired in any implementation of the present invention, a coolant fill pump 51 may be utilized together with a control valve 52 in order to assist in refilling coolant channels it they are drained emanating from the coolant channels through the vent 82 so as to prevent freezing in cold climates.

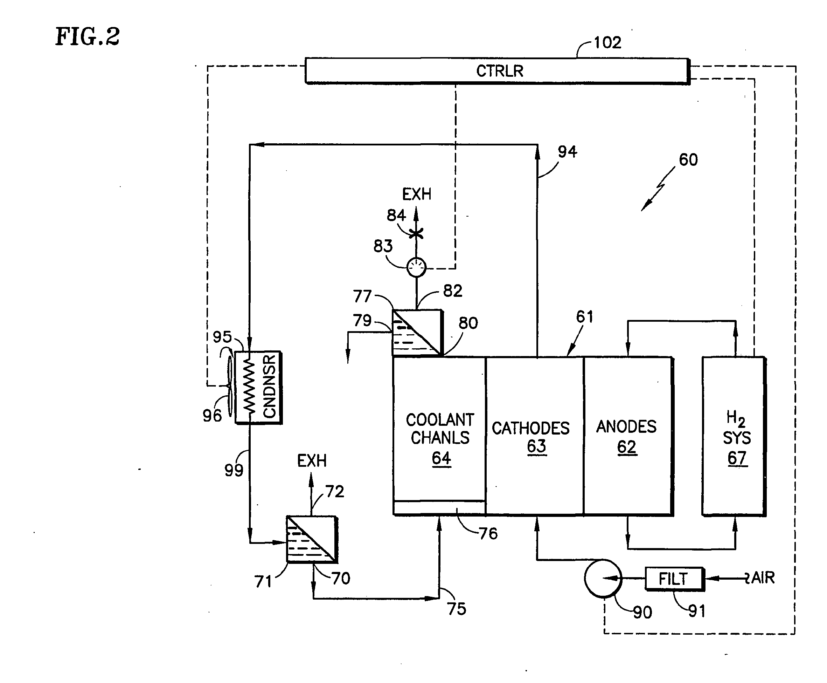

Another embodiment of the invention is illustrated in Fig. 2. Therein, a fuel cell power plant 60 includes a fuel cell stack 61 having anodes 62, cathodes 63 and coolant channels 64. A conventional hydrogen system 67 may provide relatively pure hydrogen or hydrogen-rich reformate gas to the anode 62. The nature of the hydrogen system 67 does not affect the present invention.

The fuel cell power plant 60 depicted in Fig. 2 is the type describe in U.S. patent application US 2006-141331 which employs evaporative cooling. Water is supplied to the coolant channels 64 from the liquid outlet 70 of a gas liquid separator 71, the gas outlet of which goes to exhaust (such as ambient) 72. The liquid flows through a connection 75 to a coolant inlet manifold 76, through the coolant channels 64, and into a gas liquid separator 77 at the outlets 80 of the coolant channels. The liquid outlet 79 of the separator goes to exhaust The gas outlet 82 of the separator is connected to a pressure sensor 83 and through an orifice 84 to exhaust (such as ambient).

The coolant comes from evaporation of water from the cathode exhaust. The cathodes are fed air which is pumped by a pump 90 draws air through a filter 91 from ambient and feeds the air through the cathodes, the exhaust being applied by a conduit 94 to a condenser 95 which is cooled by a rotating fan 96. The condensate goes from the condenser outlet over a conduit 99 to the gas/liquid separator 71. The separated water leaves the exit 70, as described hereinbefore and flows over the conduit 75 to the coolant inlet manifold 76. The coolant inlet manifold 76 may comprise wicking, as is described in the aforementioned application; or it may simply comprise a manifold to interconnect all of the coolant channels with the water flow. As described in the aforementioned application, the amount of water in the system may be controlled with an overflow at a suitable point.

In the embodiment of Fig. 2, the pressure sensor 83 and orifice 84 sense, by means of pressure, excessive flow of gas emanating from the coolant channels through the vent 82 and therefore excessive ingestion of gas into the coolant channels. In response, the controller 102 may take various steps in order to prevent irreversible damage to the fuel cells in the stack 61, as described with respect to Fig. 1 hereinbefore.

## Claims

1. A method in a fuel cell power plant (9, 60), comprising:
avoiding damage to fuel cells in a fuel cell stack (10, 61) within said fuel cell power plant by sensing excessive ingestion of gas into coolant channels (13, 64) of the fuel cells in said stack, and operating a controller (39, 102) in a manner to alter operational parameters within said fuel cell power plant so as to avoid damage to the fuel cells within said stack,
the method **characterized by**
said sensing comprises separating gas from liquid in the coolant flow by means of a gas-liquid separator (40; 77) and sensing excessive flow of gas from the coolant channels (13, 64) of the fuel cells by sensing excessive pressure between an orifice (47, 84) and a gas vent (45; 82) of said gas-liquid separator (40; 77), said orifice leading to ambient.

2. The method according to claim 1 further **characterized by**:
said step of sensing excessive pressure is performed by a pressure sensitive switch which either goes on or off as a function of pressure between said orifice (47, 84) and said gas vent (45; 82) of said gas-liquid separator (40; 77).

3. A method according to claim 1 further **characterized by**:
said operating step comprises shutting down the power plant.

4. A method according to claim 1 further **characterized by**:
said operating step comprises increasing pressure differential between said coolant and reactant gases in said stack.

5. A fuel cell power plant (9, 60), comprising:
a plurality of fuel cells arranged in a stack (10, 61), said fuel cells having coolant channels (13, 64), fluid within said coolant channels exhausting from said coolant channels through a coolant outlet (27, 80); and
a controller for commanding the operational parameters of said fuel cell power plant;
means (46, 47; 83, 84) in fluid communication with said coolant channel outlet (27, 80) for determining presence of excessive ingestion of gas into coolant flowing within said coolant channels and
providing a signal indication thereof, said controller responsive to said signal indication to alter the operating parameters of said fuel cell power plant in a manner to avoid damage to the fuel cells in said stack,
**characterized in that**
said means (46, 47; 83, 84) is configured to separate gas from liquid in the coolant flow by means of a gas-liquid separator (40; 77), and to sense excessive flow of gas emanating from said coolant channels (13, 64) by sensing pressure between an orifice (47, 84) and said gas vent (45; 82) of said gas-liquid separator (40; 77), said orifice leading to ambient.

6. A fuel cell plant (9, 60) according to claim 5 further **characterized by**:
said means (46, 47, 83, 84) includes a pressure sensitive switch which either goes on or off as a function of pressure between said orifice (47, 84) and said gas vent (45; 82) of said gas-liquid separator.

7. A fuel cell power plant (9, 60) according to claim 5 further **characterized by**:
said controller responsive to said signal indication to shut down said power plant.

8. A fuel cell power plant (9, 60) according to claim 5 further **characterized by**:
said controller responsive to said signal indication to increase differential in pressure between said coolant and reactant gases in said stack.

## Patentansprüche

1. Verfahren in einer Brennstoffzellen-Kraftanlage (9, 60), aufweisend:
Vermeiden einer Schädigung von Brennstoffzellen in einem Brennstoffzellenstapel (10, 61) in der Brennstoffzellen-Kraftanlage durch Abfühlen von übermäßiger Aufnahme von Gas in Kühlmittelkanäle (13, 64) der Brennstoffzellen in dem Stapel, und Betreiben einer Kontrolleinrichtung (39, 102) in einer Weise, dass Betriebsparameter in der Brennstoffzellen-Kraftanlage so geändert werden, dass eine Schädigung der Brennstoffzellen in dem Stapel vermieden wird,
wobei das Verfahren **dadurch gekennzeichnet ist, dass** das Abfühlen ein Trennen von Gas von Flüssigkeit in dem Kühlmittelstrom mittels einer Gas-Flüssigkeit-Trenneinrichtung (40; 77) und ein Abfühlen einer übermäßigen Strömung von Gas aus den Kühlmittelkanälen (13, 64) der Brennstoffzellen durch Abfühlen von übermäßigem Druck zwischen einer Mündung (47, 84) und einem Gasaustritt (45; 82) der Gas-Flüssigkeit-Trenneinrichtung (40; 77), wobei die Mündung in die Umgebung führt, aufweist.

2. Verfahren nach Anspruch 1, außerdem, **dadurch gekennzeichnet, dass**:
der Schritt des Abfühlens von übermäßigem Druck durchgeführt wird von einem auf Druck ansprechenden Schalter, der als eine Funktion des Drucks zwischen der Mündung (47, 84) und dem Gasaustritt (45; 82) der Gas-Flüssigkeit-Trenneinrichtung (40; 77) an- oder ausschaltet.

3. Verfahren nach Anspruch 1, außerdem **dadurch gekennzeichnet, dass**:
der Schritt des Betreibens ein Abschalten der Kraftanlage aufweist.

4. Verfahren nach Anspruch 1, außerdem **dadurch gekennzeichnet, dass**:
der Schritt des Betreibens ein Erhöhen des Druckunterschieds zwischen dem Kühlmittel und Reaktionsmittelgasen in dem Stapel aufweist.

5. Brennstoffzellen-Kraftanlage (9, 60) aufweisend:
eine Mehrzahl von Brennstoffzellen, die in einem Stapel (10, 61) angeordnet sind, wobei die Brennstoffzellen Kühlmittelkanäle (13, 64) haben, wobei Fluid in den Kühlmittelkanälen durch einen Kühlmittelauslass (27, 80) aus den Kühlmittelkanälen austritt; und
eine Steuer/Regeleinrichtung zum Ansteuern der Betriebsparameter der Brennstoffzellen-Kraftanlage;
eine Einrichtung (46, 47; 83, 84) in Fluidverbindung mit dem Kühlmittelkanal-Auslass (27, 80) zur Bestimmung des Vorliegens einer übermäßigen Aufnahme von Gas in Kühlmittel, das in den Kühlmittelkanälen strömt, und zur Lieferung einer Signalanzeige dafür, wobei die Kontrolleinrichtung auf die Siganlanzeige anspricht, um die Betriebsparamter der Brennstoffzellen-Kraftanlage in einer Weise zu ändern, dass eine Schädigung der Brennstoffzellen in dem Stapel vermieden wird,
**dadurch gekennzeichnet, dass**
die Einrichtung (46, 47; 83, 84) dazu ausgelegt ist, mittels einer Gas-Flüssigkeit-Trenneinrichtung (40; 77) Gas von Flüssigkeit in dem Kühlmittelstrom zu trennen, und durch Abfühlen des Drucks zwischen einer Mündung (47, 84) und dem Gasaustritt (45; 82) der Gas-Flüssigkeit-Trenneinrichtung; (40; 70), wobei die Mündung in die Umgebung führt, eine übermäßige Strömung von Gas, das aus den Kühlmittelkanälen (13, 64) ausströmt, abzufühlen.

6. Brennstoffzellen-Anlage (9, 60) nach Anspruch 5, außerdem **dadurch gekennzeichnet, dass**:
die Einrichtung (46, 47; 83, 84) einen auf Druck ansprechenden Schalter aufweist, der als eine Funktion des Drucks zwischen der Mündung (47, 84) und dem Gasaustritt (45; 82) der Gas-Flüssigkeit-Trenneinrichtung entweder an- oder ausschaltet.

7. Brennstoffzellen-Kraftanlage (9, 60) nach Anspruch 5, außerdem **dadurch gekennzeichnet, dass**:
die Kontrolleinrichtung auf die Signalanzeige anspricht, indem sie die Kraftanlage abschaltet.

8. Brennstoffzellen-Kraftanlage (9, 60) nach Anspruch 5, außerdem **dadurch gekennzeichnet, dass**:
die Kontrolleinrichtung auf die Signalanzeige anspricht, indem sie den Druckunterschied zwischen dem Kühlmittel und den Reaktionsmittelgasen in dem Stapel erhöht.

## Revendications

1. Procédé dans une centrale électrique à pile à combustible (9, 60), comprenant :
le fait d'éviter d'endommager des piles à combustible dans un empilement de piles à combustible (10, 61) au sein de ladite centrale électrique à pile à combustible en détectant une ingestion excessive de gaz dans des canaux de fluide de refroidissement (13, 64) des piles à combustible dans ledit empilement, et
l'exploitation d'une unité de commande (39, 102) de manière à modifier des paramètres opérationnels au sein de ladite centrale électrique à pile à combustible de façon à éviter d'endommager les piles à combustible au sein dudit empilement,
le procédé étant **caractérisé par**
ladite détection comprend la séparation de gaz d'un liquide dans l'écoulement de fluide de refroidissement au moyen d'un séparateur gaz-liquide (40 ; 77) et la détection d'un écoulement excessif de gaz en provenance des canaux de fluide de refroidissement (13, 64) des piles à combustible en détectant une pression excessive entre un orifice (47, 84) et un évent à gaz (45 ; 82) dudit séparateur gaz-liquide (40 ; 77), ledit orifice menant à l'air ambiant.

2. Procédé selon la revendication 1, **caractérisé en outre en ce que** :
ladite étape de détection de pression excessive est réalisée par un commutateur sensible à la pression qui est activé ou est désactivé en fonction d'une pression entre ledit orifice (47, 84) et ledit évent à gaz (45 ; 82) dudit séparateur gaz-liquide (40 ; 77).

3. Procédé selon la revendication 1, **caractérisé en outre en ce que** :
ladite opération d'exploitation comprend l'arrêt de la centrale électrique.

4. Procédé selon la revendication 1, **caractérisé en outre en ce que** :
ladite étape d'exploitation comprend l'augmentation d'un différentiel de pression entre ledit fluide de refroidissement et des gaz réactifs dans ledit empilement.

5. Centrale électrique à pile à combustible (9, 60) comprenant :
une pluralité de piles à combustible agencées en un empilement (10, 61), lesdites piles à combustible ayant des canaux de fluide de refroidissement (13, 64), un fluide au sein desdits canaux de fluide de refroidissement s'échappant desdits canaux de fluide de refroidissement à travers un refoulement de fluide de refroidissement (27, 80) ; et
une unité de commande pour commander les paramètres opérationnels de ladite centrale électrique à pile à combustible ;
un moyen (46, 47 ; 83, 84) en communication fluidique avec ledit refoulement de canal de fluide de refroidissement (27, 80) pour déterminer une présence d'ingestion excessive de gaz dans un fluide de refroidissement s'écoulant au sein desdits canaux de fluide de refroidissement et pour fournir une indication de signal de celle-ci, ladite unité de commande répondant à ladite indication de signal pour modifier les paramètres opérationnels de ladite centrale électrique à pile à combustible de manière à éviter d'endommager les piles à combustible dans ledit empilement,
**caractérisée en ce que**
ledit moyen (46, 47 ; 83, 84) est configuré pour séparer un gaz d'un liquide dans l'écoulement de fluide de refroidissement au moyen d'un séparateur gaz-liquide (40 ; 77), et pour détecter un écoulement excessif de gaz en provenance desdits canaux de fluide de refroidissement (13, 64) en détectant une pression entre un orifice (47, 84) et ledit évent à gaz (45 ; 82) dudit séparateur gaz-liquide (40 ; 77), ledit orifice menant à l'air ambiant.

6. Centrale à pile à combustible (9, 60) selon la revendication 5, **caractérisée en outre en ce que** :
ledit moyen (46, 47 ; 83, 84) comprend un commutateur sensible à la pression qui est activé ou est désactivé en fonction d'une pression entre ledit orifice (47, 84) et ledit évent à gaz (45 ; 82) dudit séparateur gaz-liquide.

7. Centrale électrique à pile à combustible (9, 60) selon la revendication 5, **caractérisée en outre en ce que** :
ladite unité de commande répond à ladite indication de signal pour arrêter ladite centrale électrique.

8. Centrale électrique à pile à combustible (9, 60) selon la revendication 5, **caractérisée en ce que** :
ladite unité de commande répond à ladite indication de signal pour augmenter un différentiel de pression entre ledit fluide de refroidissement et des gaz réactifs dans ledit empilement.
